## Europäisches Patentamt

## European Patent Office

## Office européen des brevets

(19)

(11) Veröffentlichungsnummer: **0 005 752**
**B1**

(12)

# EUROPÄISCHE PATENTSCHRIFT

(45) Veröffentlichungstag der Patentschrift:
**04.11.81**

(51) Int. Cl.³: **E 04 F 17/08,** E 04 F 19/08,
H 02 G 3/04

(21) Anmeldenummer: **79101423.6**

(22) Anmeldetag: **10.05.79**

(54) **Elektrischer und/oder gastechnischer Installationskanal und Verfahren zur Montage von dessen Wandplatte.**

(30) Priorität: **26.05.78 AT 3816/78**

(43) Veröffentlichungstag der Anmeldung:
**12.12.79 Patentblatt 79/25**

(45) Bekanntmachung des Hinweises auf die Patenterteilung:
**04.11.81 Patentblatt 81/44**

(84) Benannte Vertragsstaaten:
**BE CH DE FR GB IT LU NL SE**

(56) Entgegenhaltungen:
**BE-A-809 277**
**CH-A-389 063**
**CH-A-535 882**
**DE-A-1 590 494**
**DE-A-2 414 754**
**DE-B-2 121 230**
**DE-U-7 117 812**
**GB-A-936 389**
**US-A-890 285**
**US-A-3 725 568**

(73) Patentinhaber: **Zumtobel Aktiengesellschaft, Höchster Strasse 8, A-6850 Dornbirn (AT)**

(72) Erfinder: **Schade, Wolfgang, Lannerstrasse 34, A-6850 Dornbirn (AT)**

(74) Vertreter: **Hefel, Herbert, Dipl.-Ing., Egelseestrasse 65a, A-6800 Feldkirch-Tosters (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Elektrischer und/oder gastechnischer Installationskanal und Verfahren zur Montage von dessen Wandplatte

Die Erfindung bezieht sich auf einen elektrischen und/oder gastechnischen Installationskanal mit im Querschnitt im wesentlichen U-förmigen Gehäuse und mit Entnahmestellen, Schalter, Steckern od. dgl., welche an einer in die Gehäuseöffnung einsetzbaren, abnehmbaren Wandplatte des Installationskanals angeordnet sind und wobei die Entnahmestellen od. dgl. an der Rückseite der Wandplatte befestigt sind und mindestens ein Rand des Installationskanals als U-förmige Nut ausgebildet ist und mindestens ein Rand der Wandplatte mittels in die U-förmige Nut eingreifenden Verbindungsmitteln mit dem Installationskanal verbunden ist und die Wandplatte mit ihrem zweiten Rand an einer Profilierung des zweiten Randes des Installationskanals einhängbar ist, sowie auf ein Verfahren zur Montage von dessen Wandplatte.

Einrichtungen dieser Art sind bekannt. Die Wandplatten werden am U-Profil angeschraubt. Dies ist, montagetechnisch gesehen, ein relativ großer Aufwand. Bei Einrichtungen ähnlicher Art sind die Wandplatten durch einen Schnappverschluß mit dem U-Profil des Installationskanals verbunden. Bei dieser letzterwähnten Konstruktion sind jedoch die Geräte nicht an der Wandplatte, sondern an der Innenseite des U-Profils des Installationskanals befestigt, so daß die eingeschnappten Wandplatten keiner Beanspruchung unterworfen sind, wenn Kupplungen und Verbindungen hergestellt bzw. gelöst werden. Der Anordnung der Entnahmestellen wie Schalter, Stecker, Gasanschlüsse u. dgl. an der Rückseite der Wandplatte wird jedoch der Vorzug eingeräumt, weil es dank dieser Konstruktion möglich ist, fabriksseitig fertig verdrahtete Einheiten vorzubereiten, die nach Bedarf eingesetzt bzw. ausgetauscht werden können. Da bei dieser Konstruktion die Verbindungs- und Kupplungseinheiten direkt an der Wandplatte befestigt sind, werden auf diese Wandplatte beim Herstellen bzw. Lösen solcher Kupplungen und Verbindungen doch erhebliche Kräfte ausgeübt, so daß eine feste Verbindung zwischen Wandplatte einerseits und Installationskanal andererseits geschaffen werden muß, für welche jedoch ein Schnappverschluß nicht das geeignete Mittel darstellt.

Es ist auch ein Sammelkanal für Leitungsinstallationen in Gebäuden bekannt. Das den Kanal bildende U-Profil besitzt randseitig innenliegende, nach außen offene, U-förmige schmale Nuten. Dieses Nuten-U-Profil ist offen, also ohne jegliche Hinterschneidung ausgebildet. Der auf die Öffnung des ersten Profils aufsetzbare Deckel weist randseitig gegen dieses Profil gerichtete leistenartige Erhebungen auf, die bei aufgesetztem Deckel in diese Randnuten ragen. Zur Sicherung des Deckels besitzt dieser randseitig in ihn eingesetzte Drehriegel. Diese bestehen aus einem Schaft mit einem Kopf und am Schaft ist ein Riegelglied befestigt. Diese Konstruktion bedingt vorerst einmal eine exakte Anpassung der Schaftriegellänge an diejenigen Teile, mit welchen der Riegel unmittelbar zusammenwirkt, damit ein fester Sitz der Teile gegeneinander gewährleistet ist. Ferner müssen zur Herstellung einer Aufnahmeöffnung für den Drehriegel randseitig die Deckel angebohrt werden und schlußendlich muß zuerst der Schaft des Drehriegels eingefügt und dann das Riegelglied daran fixiert werden. Der Riegel selbst besteht aus zwei getrennt gefertigten Teilen, die bei der Montage fest miteinander verbunden werden müssen. Es bedarf wohl keines rechnerischen Nachweises, daß alle diese aufgezeigten Maßnahmen außerordentlich aufwendig sind.

Bei einem bekannten im Querschnitt U-förmigen Installationskanal besitzen die diesen Kanal verschließenden Wandplatten am einen Rand eine U-förmige Nut, die den einen Rand des Installationskanals aufnimmt. Am anderen Rand der Wandplatte sind Bohrungen vorgesehen zum Durchstecken von Gewindeschrauben. Zur Aufnahme der Gewindeschrauben besitzt der andere Rand des Installationskanals eine nach oben zur Wandplatte hin offene U-förmige Nut, deren inneren, einander gegenüberliegenden Wandungen geriffelt sind. Diese die geriffelten Wandungen aufweisende Nut dient zur Aufnahme der erwähnten Befestigungsschrauben. Diese Befestigungsschrauben können an jeder beliebigen Stelle dieser Nut eingedreht werden, so daß es nicht mehr notwendig ist, am Rand des Installationskanals fabriksseitig oder auch vorort Löcher bohren zu müssen. Da diese U-förmigen Installationskanäle extrudiert werden, können sie aus nur einem relativ weichen Material gefertigt werden. Die Befestigungsschrauben finden daher in dieser Riffelung keinen genügenden und keinen ausreichenden Halt und darüber hinaus müssen bei der Montage diese Befestigungsschrauben mit großer Vorsicht eingedreht werden, damit die Riffelung nicht ausreißt bzw. der U-förmig profilierte Rand nicht aufgebogen wird. Bei diesen Wandplatten handelt es sich ja nicht um Zierdeckel, die ausschließlich und allein eine dekorative Wirkung ausüben sollen, sondern um eine mechanisch beanspruchte Schutzabdeckung, so daß ein fester Halt unabdingbar ist. Die vorstehend erläuterte bekannte Konstruktion ist zwar sehr einfach, vermag aber keine ausreichende Sicherheit zu gewährleisten.

Die Erfindung zielt daher auf die Schaffung einer festen, jedoch montagefreundlichen und vor allem hinsichtlich ihres Aufwandes vereinfachten Verbindung ab und dies gelingt vorschlagsgemäß dadurch, daß die randseitige Nut des Installationskanals hinterschnitten ausgebildet ist und die mit der hinterschnittenen Nut zusammenwirkende Verbindungsmittel an der Wandplatte angeformte L- oder T-förmige, dem Installationskanal zugewandte Profilleisten sind, deren zur Wandplatte senkrechter Steg vom Rand der Wandplatte etwas distanziert ist und in die Nut mindestens ein verdrehbarer, im wesentlichen rechteckiger Riegelteil einsetzbar ist, der in seiner Riegelstellung einerseits gegen die Innenwand des äußeren Schenkels der U-förmigen Nut des Installationskanals und andererseits gegen den senkrechten Steg der L- oder T-förmigen Profilleiste der Wandplatte drückt. Der Riegelteil nach der Erfindung bildet einen getrennt gefertigten und getrennt lieferbaren Bauteil, der in jeder beliebigen Stelle des Leitungskanals bei der Montage eingefügt werden kann, ohne daß es herstellerseitig zusätzlicher vorbereitender Arbeiten und Montagen bedarf. Dank der Erfindung ist es nicht erforderlich, die Abdeckplatte oder den Deckel zusätzlich zu bearbeiten, also beispielsweise Aufnahmebohrungen für einen Riegel vorzusehen, noch müssen herstellerseitig in eine eventuelle Aufnahmebohrung dieser Art Bauteile eingesetzt werden, denn der erfindungsgemäße Riegelteil wirkt von außen auf den Deckel und kann an jeder beliebigen Stelle bei der Montage des Kanals eingefügt werden. Dieser Riegelteil wirkt als Spannglied. Die erfindungsgemäße Konstruktion stellt daher einen ganz erheblichen Fortschritt gegenüber dem aufgezeigten Stand der Technik dar.

Das Verfahren zur Montage der Wandplatte des elektrischen und/oder gastechnischen Installationskanals besteht darin, daß die Wandplatte in einer gegenüber ihrer Montagestellung seitlich versetzten Stellung an den Rand des U-förmigen Gehäuses herangeführt und die randseitigen Profilierungen des Gehäuses einerseits und der Wandplatte andererseits in Deckung gebracht werden, und anschließend die Wandplatte in ihrer Ebene seitlich bis zum Anschlag verschoben wird, worauf in dem dadurch frei werdenden Nutenraum ein Riegelteil eingesetzt und um 90° verdreht wird.

Um die Erfindung zu veranschaulichen, wird sie anhand eines Ausführungsbeispiels erörtert, ohne die Erfindung auf diese spezifisch hier dargestellte Konstruktion einzuschränken. Es zeigt

Fig. 1 einen Querschnitt durch einen Installationskanal mit eingesetzter Wandplatte,

Fig. 2 das Wandplattenprofil im Querschnitt und die

Fig. 3 und 4 den Riegelteil in Draufsicht und in Ansicht, und zwar in einem gegenüber den Fig. 1 und 2 vergrößerten Maßstab.

Der Installationskanal 1, der an einer Krankenzimmerwand befestigt wird und der elektrische und/oder gastechnische Installationen aufzunehmen hat, besitzt unter anderem ein U-förmiges Gehäuse 2, das im gegenständlichen Falle nach unten hin offen ist. Die Erfindung kann aber auch bei solchen U-Profilen angewandt werden, deren Öffnung stirnseitig oder gar nach oben liegt. Die offene Seite dieses U-förmigen Gehäuses 2, das ein oder mehrteilig ausgebildet sein kann, ist hier in der gezeigten Querschnittsebene durch eine beispielsweise hinsichtlich ihrer Abmessungen quadratische Wandplatte 3 verschlossen, welche eine Gerätesteckdose 4 trägt, die über den Bügel 5 in Verbindung mit formschlüssigen Profilelementen 6 an der Rückseite der Wandplatte 3 mit dieser fest verbunden ist. Anstelle einer Gerätesteckdose können auch Gasanschlußkupplungen, Schalter und andere Verbindungselemente oder Betätigungsglieder hier vorgesehen sein. Die Wandplatte 3 kann auch eine rechteckige Form aufweisen und dabei mehrere Geräteelemente od. dgl. tragen.

Der (in der Zeichnung) linke Rand 8 des U-förmigen Gehäuses 2 besitzt eine L-förmige Profilierung mit einem vertikalen Schenkel 7 und einem horizontalen Schenkel 9, der letztere ist gegen die Öffnung des U-förmigen Gehäuses 2 gerichtet. In diese L-förmige Profilierung ist die L- oder T-förmige Profilleiste 14 der Wandplatte 3 einhängbar. Der (in der Zeichnung) rechte Rand 10 des U-förmigen Gehäuses ist als hinterschnittene U-förmige Nut ausgebildet, die von zwei L-förmigen Profilierungen begrenzt wird, deren freie Schenkel 11 und 12 gegeneinandergerichtet sind, die jedoch höhenmäßig etwas gegeneinander versetzt sind, und zwar um die Wandstärke der Wandplatte 3.

Der Installationskanal 1 bzw. seine Teile sind stranggepreßte Profile. Die freien Schenkel 9, 11 der Ränder 8, 10 des Installationskanals 1 sind gleichgerichtet und in gleicher Ebene angeordnet.

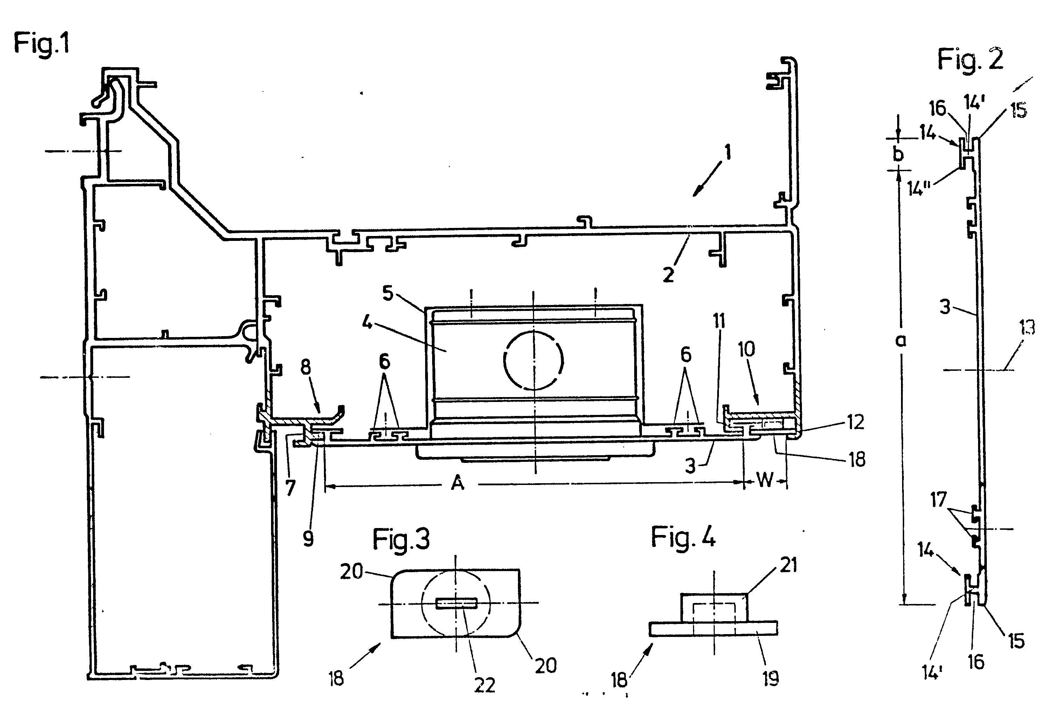

Die Wandplatte 3 ist ebenfalls als stranggepreßtes Profil ausgebildet. Randseitig (Fig. 2) sind symmetrisch zur Mittelachse 13 an der Rückseite T-förmige Profilleisten 14 angeformt, wobei der zur Wandplatte 3 senkrechte Steg 14' dieser Profilierung gegenüber dem Rand 15 etwas zurückgesetzt ist, so daß eine kleine Nut 16 entsteht. Ferner sind an der Rückseite der Wandplatte 3 ebenfalls in symmetrischer Anordnung bezüglich der Mittelachse 13 weitere Profilleisten 17 vorgesehen, die für die Aufnahme von Befestigungsmitteln und Halterungen dienen.

Aus der Fig. 1 ist erkennbar, daß die Breite b des zur Wandplatte 3 parallelen Schenkels 14" der T-förmigen Profilierung an der Rückseite der Wandplatte 3 kleiner ist als die Öffnungsweite W der am Rand 10 des U-förmigen Gehäuses 2 vorgesehenen hinterschnittenen Nut. Andererseits ist die Entfernung A der Enden der beiden gleichgerichteten Schenkel 9 und 11 der L-förmigen Profilierungen gleich dem Maß a an der Wandplatte 3. Zum Einsetzen der Wandplatte 3 in die Profilöffnung wird sie in einer gegenüber der aus Fig. 1 ersichtlichen Lage etwas seitlich (nach rechts) versetzten Stellung an das U-förmige Gehäuse 2 herangeführt, so daß die T-förmigen Profilierungen am Rand der Wandplatte 3 in die hinterschnittene U-förmige Nut des Randes 10 eingeführt werden kann. Ist dies geschehen, so wird die Wandplatte 3 etwas nach links gerückt, bis sie die in Fig. 1 ersichtliche Stellung einnimmt. Um nun die Wandplatte 3 in dieser Lage zu sichern und zu fixieren, werden Riegelteile 18 in die U-förmig hinterschnittene Nut eingesetzt, wobei hier noch zu beachten ist, daß durch die L-förmige Profilierung 12 des Gehäuses 2 und durch den rechten Rand der Wandplatte 3 eine weitere hinterschnittene U-Nut gebildet wurde.

Dieser Riegelteil 18 ist in den Fig. 3 und 4 in vergrößertem Maßstab in zwei Ansichten dargestellt. Der Riegelteil 18 besteht aus einem rechteckigen Plättchen 19 mit mindestens zwei abgerundeten Ecken, welche zueinander diametral liegen, ferner aus einem zylindrischen Ansatz 21, in welchen, von Plättchen 19 ausgehend eine schlitzartige Vertiefung 22 ragt. Das rechteckige Plättchen 19 ist nun so bemessen, daß es in die durch die Profilierung 12 und den Rand der Wandplatte 3 gebildete U-förmige hinterschnittene Nut eingeführt werden kann, wobei die Länge dieses Plättchers 19 im wesentlichen der inneren Weite dieser Nut entspricht bzw. um ein geringes Maß größer als diese ist. Dieses Plättchen 19 bzw. der Riegelteil 18 wird mit seiner schlitzartigen Vertiefung 22 auf die Klinge eines Schraubenziehers gesteckt, in die Nut eingeführt und dann mit dem Schraubenzieher um 90° verdreht, so daß es in die in Fig. 1 ersichtliche Stellung einrastet und nun hier klemmend festsitzt. Die Lösung des Riegelteiles 18 erfolgt in umgekehrter Reihenfolge.

Aufgrund der vorzugsweise gewählten symmetrischen Gestaltung der Wandplatte 3 kann diese ohne Rücksicht auf ihre jeweilige Lage gegenüber dem Gehäuse 2 an dieses angesetzt werden. Auch für den linken Rand könnte eine andere Profilierung vorgesehen werden, da es hier im wesentlichen nur darauf ankommt, beide Teile miteinander zu verbinden, wozu es nicht unbedingt einer L-förmigen und einer U-förmigen Randprofilierung bedarf.

**Patentansprüche**

1. Elektrischer und/oder gastechnischer Installationskanal (1) mit im Querschnitt im wesentlichen U-förmigen Gehäuse (2) und mit Entnahmestellen, Schalter, Steckern od. dgl., welche an einer in die Gehäuseöffnung einsetzbaren, abnehmbaren Wandplatte (3) des Installationskanals (1) angeordnet sind und wobei die Entnahmestellen od. dgl. an der Rückseite der Wandplatte (3) befestigt sind und mindestens ein Rand (10) des Installationskanals (1) als U-förmige Nut ausgebildet ist und mindestens ein Rand (15) der Wandplatte (3) mittels in die U-förmige Nut eingreifenden Verbindungsmitteln mit dem Installationskanal (1) verbunden ist und die Wandplatte (3) mit ihrem zweiten Rand an einer Profilierung des zweiten Randes (8) des Installationskanals (1) einhängbar ist, dadurch gekennzeichnet, daß die randseitige Nut des Installationskanals (1) hinterschnitten ausgebildet ist und die mit der hinterschnittenen Nut zusammenwirkende Verbindungsmittel an der Wandplatte (3) angeformte L- oder T-förmige, dem Installationskanal (1) zugewandte Profilleisten (14) sind, deren zur Wandplatte (3) senkrechter Steg (14') vom Rand (15) der Wandplatte (3) etwas distanziert ist, und in die Nut mindestens ein verdrehbarer, im wesentlichen rechteckiger Riegelteil (18) einsetzbar ist, der in seiner Riegelstellung einerseits gegen die Innenwand des äußeren Schenkels (12) der U-förmigen Nut des Installationskanals (1) und andererseits gegen den senkrechten Steg (14') der L- oder T-förmigen Profilleiste (14) der Wandplatte (3) drückt.

2. Elektrischer und/oder gastechnischer Installationskanal nach Anspruch 1, dadurch gekennzeichnet, daß die Wandplatte (3) an ihren beiden Rändern (15) auf der dem Installationskanal (1) zugewandten Seite T-förmige Profilleisten (14) aufweist und die Anordnung bezüglich einer Längsmittelebene (13) der Wandplatte (3) symmetrisch ist.

3. Elektrischer und/oder gastechnischer Installationskanal nach Anspruch 1 oder Anspruch 2, dadurch gekennzeichnet, daß der Horizontalsteg (14'') der T-förmigen Profilierung (14) der Wandplatte (3) schmaler ist als die Öffnungsbreite der Nut des Randes (10) des Installationskanals (1).

4. Elektrischer und/oder gastechnischer Installationskanal nach Anspruch 1, dadurch gekennzeichnet, daß die die Hinterschneidung bildenden einander zugewandten Schenkel (11, 12) der Nut des Randes (10) des Installationskanals (1) höhenmäßig gegeneinander versetzt sind, wobei der außenseitige Schenkel (12) um die Wandstärke der Wandplatte (3) tiefer liegt als der innere Schenkel dieser Nut.

5. Elektrischer und/oder gastechnischer Installationskanal nach Anspruch 1, dadurch gekennzeichnet, daß der Riegelteil (18) aus einem im wesentlichen rechteckigen Plättchen (19) mit vorzugsweise abgerundeten Ecken (20) besteht, welches in die durch den äußeren Schenkel (12) und die randseitige Profilierung der Wandplatte gebildete Nut einsetzbar und in dieser verdrehbar ist.

6. Elektrischer und/oder gastechnischer Installationskanal nach Anspruch 5, dadurch gekennzeichnet, daß im Mittelbereich des rechteckigen Plättchens (19) ein zylindrischer Ansatz (21) vorgesehen ist, in welchen ein vom Plättchen (19) ausgehender Schlitz (22) für den Ansatz einer Schraubenzieherklinge ragt.

7. Elektrischer und/oder gastechnischer Installationskanal nach einem der Ansprüche 1 bis 5, dadurch gekennzeichnet, daß der andere Rand (8) des Installationskanals (1) eine L-förmige Profilierung aufweist, in welche die L- oder T-förmige Profilleiste (14) der Wandplatte (3) einhängbar ist.

8. Elektrischer und/oder gastechnischer Installationskanal nach einem der Ansprüche 1 bis 7, dadurch gekennzeichnet, daß die mit der Wandplatte (3) bzw. deren randseitiger Profilierung (14) zusammenwirkenden freien Schenkel der Ränder (8, 10) des Installationskanals (1) gleichgerichtet sind und in gleichen Ebenen angeordnet sind.

9. Verfahren zur Montage der Wandplatte des elektrischen und/oder gastechnischen Installationskanals nach einem der Ansprüche 1 bis 8, dadurch gekennzeichnet, daß die Wandplatte (3) in einer gegenüber ihrer Montagestellung seitlich versetzten Stellung an den Rand des U-förmigen Gehäuses (2) herangeführt und die randseitigen Profilierungen des Gehäuses (2) einerseits und der Wandplatte (3) andererseits in Deckung gebracht werden, und anschließend die Wandplatte (3) in ihrer Ebene seitlich bis zum Anschlag verschoben wird, worauf in dem dadurch frei werdenden Nutenraum ein Riegelteil (18) eingesetzt und um 90° verdreht wird (Fig. 1).

## Claims

1. Electrical and/or gas-supply services duct (1) with a housing (2) of substantially U-shaped cross-section and with outlet points, switches, plugs or the like, which are disposed on a detachable wall plate (3) of the services duct (1), which wall plate can be inserted into the housing aperture, and wherein the outlet points or the like are secured on the rear side of the wall plate (3) and at least one edge (10) of the services duct (1) is designed as a U-shaped groove and at least one edge (15) of the wall plate (3) is connected to the services duct (1) by means of connecting means engaging in the U-shaped groove; and with its second edge the wall plate (3) can be fitted on a profiled section of the second edge (8) of the services duct (1), characterised in that the side edge groove of the services duct (1) is of undercut design and the connecting means cooperating with the undercut groove are L-shaped or T-shaped section elements (14) formed on the wall plate (3) and facing the services duct (1), the web (14') of which elements perpendicular to the wall plate (3) is slightly spaced from the edge (15) of the wall plate (3), and at least one rotatable, substantially rectangular locking part (18) can be inserted in the groove, which locking part in its locking position presses, on the one hand, against the inner wall of the outer arm (12) of the U-shaped groove of the services duct (1) and, on the other hand, against the perpendicular web (14') of the L-shaped or T-shaped section element (14) of the wall plate (3).

2. Electrical and/or gas-supply services duct according to claim 1, characterised in that the wall plate (3) has T-shaped sectional fillets (14) at both its edges (15) on the side facing the services duct (1) and the arrangement is symmetrical in relation to a longitudinal centre plane (13) of the wall plate (3).

3. Electrical and/or gas-supply services duct according to claim 1 or claim 2, characterised in that the horizontal web (14') of the T-shaped element (14) of the wall plate (3) is narrower than the opening width of the groove of the edge (10) of the services duct (1).

4. Electrical and/or gas-supply services duct according to claim 1, characterised in that the arms (11, 12) of the groove of the edge (10) of the services duct (1), which arms form the undercut and face one another, are offset vertically relative to one another, in which case the outer arm (12) is situated lower than the inner arm of this groove by the wall thickness of the wall plate (3).

5. Electrical and/or gas-supply services duct according to claim 1, characterised in that the locking part (18) consists of a substantially rectangular small plate (19) with preferably rounded corners (20), which can be inserted into the groove formed by the outer arm (12) and the side edge of the wall plate and can be rotated therein.

6. Electrical and/or gas-supply services duct according to claim 5, characterised in that in the centre region of the rectangular small plate (19) there is provided a cylindrical extension (21) into which extends a slot (22) starting from the small plate (19) and for the insertion of a screwdriver blade.

7. Electrical and/or gas-supply services duct according to one of claims 1 to 5, characterised in that the other edge (8) of the services duct (1) has an L-shaped profiling in which the L-shaped or T-shaped section element (14) of the wall plate (3) can be fitted.

8. Electrical and/or gas-supply services duct according to one of claims 1 to 7, characterised in that the free arms of the edges (8, 10) of the services duct (1) cooperating with the wall plate (3) or with its side edge profiling (14) are equidirectional and are arranged in like planes.

9. Method for installing the wall plate of the electrical and/or gas-supply services duct according to one of claims 1 to 8, characterised in that the wall plate (3) is brought up to the edge of the U-shaped housing (2) in a position laterally offset relative to its installation position and the side edge profilings of the housing (2), on the one hand, and the wall plate (3), on the other hand, are brought into register and, subsequently, the wall plate (3) is shifted laterally in its plane until abutment, whereupon a locking part (18) is inserted into the groove space thereby left free and is rotated through 90° (Fig. 1).

## Revendications

1. Canal pour installations électriques et/ou de gaz (1) comprenant un carter (2) à section transversale essentiellement en forme de U, et d'emplacement de prise, contacteurs, socles d'enfichage, ou analogues qui sont disposés sur une plaque de paroi (3) du canal (1), amovible, insérée dans une ouverture du carter, les emplacements de prise étant fixés sur la face arrière de la plaque de paroi (3), et au moins un bord (10) du canal d'installations (1) étant constitué comme une gorge en forme du U, et au moins un bord (15) de la plaque de paroi (3) étant relié au canal d'installations au moyen d'organes de liaison engagés dans cette gorge en forme de U, la plaque de paroi (3) étant accrochée avec son second bord dans un profil du second bord (8) du canal (1), canal pour installations caractérisé en ce que la gorge du bord du canal est pourvue d'un découpage en profil de ses parois, et les organes de liaison coopérant avec cette découpée sont des barrettes de profil (14) en forme de L ou de T, formées sur la plaque de paroi (3) et tournées vers le canal (1), dont le bras (14') perpendiculaire à la plaque est un peu distancé du bord (15) de la plaque (3), au moins une pièce de verrouillage, (18) essentiellement rectangulaire, rotative, pouvant être engagée dans la gorge, pour s'appliquer à pression, dans sa position de verrouillage, d'un côté, contre la face intérieure du bras extérieur (12) du profil en U de la gorge du canal (1), et, de l'autre côté, contre le bras perpendiculaire (14') de la barrette de profil en forme de L ou de T (14) de la plaque de paroi (3).

2. Canal pour installations électriques ou de gaz suivant la revendication 1, caractérisé en ce que la plaque de paroi (3) présente sur chacun de ses bords (15) sur la face tournée vers le canal (1), des barrettes profilées (14) en forme de T, dont la disposition est symétrique par rapport à un plan longitudinal médian (13) de la plaque de paroi (3).

3. Canal pour installations électriques ou de gaz suivant l'une des revendications 1 ou 2, caractérisé en ce que le bras horizontal (14'') du profil (14) en forme de T de la plaque de paroi (3) est plus étroit que la largeur d'ouverture de la gorge dans le bord (10) du canal d'installations (1).

4. Canal pour installations électriques ou de gaz suivant la revendication 1, caractérisé en ce que les branches (11, 12) de la gorge du bord (10) du canal (1) qui forment le profil de découpage sont décalées entre elles en hauteur, la branche du côté extérieur (12) étant décalée d'une distance égale à l'épaisseur de la plaque de paroi (3) audessous de la branche intérieure de cette gorge.

5. Canal pour installations électriques et de gaz suivant la revendication 1, caractérisé en ce que la pièce de verrou (18) consiste en une plaquette rectangulaire (19) à coins arrondis (20), qui peut être insérée dans la gorge formée par la branche extérieure (12) et le profil de bord de la plaque de paroi et peut être tournée dans cette gorge.

6. Canal pour installations électriques et de gaz suivant la revendication 5, caractérisé en ce que, au centre de la plaquette rectangulaire (19) est prévu un appendice cylindrique (21) dans lequel est prévue une fente (22) saillante sur la plaquette (19) pour l'introduction de la lame d'un tournevis.

7. Canal pour installations électriques ou de gaz suivant l'une quelconque des revendications 1 à 5, caractérisé en ce que l'autre bord (8) du canal (1) présente un profil en forme de L, dans lequel peut être accrochée la barrette (14) en forme de L ou de T de la plaque de paroi (3).

8. Canal pour installations électriques et de gaz suivant l'une quelconque des revendications 1 à 7, caractérisé en ce que les branches libres des bords (8, 10) du canal (1) qui coopèrent avec la plaque de paroi (3) et le profil (14) de son bord, sont orientées dans la même direction et s'étendent dans un même plan.

9. Procédé pour le montage de la plaque de paroi de fermeture (3) du canal d'installations électriques et de gaz suivant l'une quelconque des revendications 1 à 8, procédé caractérisé en ce que la plaque de paroi (3) est tout d'abord déplacée vers le bord du carter en forme de U (2) dans une position décalée latéralement par rapport à sa position de montage, les profils de bord du carter, d'une part, et des profils de bord de la plaque de paroi, d'autre part, sont alors amenés en superpositions, et, ensuite, la plaque de paroi (3) est déplacée dans son plan jusqu'à une butée entre les deux pièces, après quoi une pièce de verrou (18) est insérée dans l'espace de gorge devenu libre dans les deux pièces et elle est tournée de 90 degrés pour son immobilisation.

Fig. 2

Fig.1

Fig. 4

Fig.3